# EUROPEAN PATENT APPLICATION

(11) **EP 2 508 295 A1**
(43) Date of publication of application: **10.10.2012**
(21) Application number: 11275060.9
(22) Date of filing: 07.04.2011
(51) Int. Cl.: B23K 37/00, B23K 9/32, B23Q 11/08, F16P 1/06, F16P 3/00

(54) **Portable work screen**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A portable work screen apparatus includes a screen (10) and at least one support comprising an attachment device (15) for, in use, releasably connecting the screen (10) to a surface proximal to a workpiece.

## Description

The present invention relates to a portable work screen, such as a welding screen.

Work operations such as welding, particularly arc welding, produce hazardous radiation damage in the form of ultraviolet radiation (UV), infrared radiation (IR) and intense visible light. Welding also produces heat, flames and sparks. Welders usually wear welding masks, helmets or goggles including protective "welding filter" lenses to prevent radiation damage to the eyes. Welding screens are typically also used to shield adjacent areas from welding radiation and, optionally, to contain sparks or flames. Welding screens may also be used to shield cutting or grinding operations by containing sparks or other debris.

Conventional work/safety screens of this type are in the form of a free standing/ground-based rigid screen or a hanging welding curtain. Such screens or curtains are typically "full height", for example 1.8m (6ft), and so are not usable in confined spaces and can be cumbersome to transport. It may not be possible to locate such screens close to the workpiece. Conventional freestanding screens can also be unstable and only usable on fairly level horizontal surfaces.

Embodiments of the present invention are intended to provide a portable screen that may be used in situations where a conventional screen is not practical.

According to one aspect of the present invention there is provided a portable work screen apparatus including a screen and at least one support comprising an attachment device for, in use, releasably connecting the screen to a surface proximal to a workpiece.

The support may include a base portion, the attachment device being mounted on the base portion. The attachment device may be rigidly attached to the base portion. Alternatively, the attachment device may be adjustable, or may have a predetermined range of motion to enable self alignment.

The support can further include an arm extending from the base portion, the screen being mounted on the arm. The arm may be in substantially perpendicular alignment to the attachment plane of the attachment device. It will be appreciated that the attachment plane of the attachment device is, in use, the plane of the surface the device engages. The support may have an L-shaped profile.

The portable work screen apparatus may include a pair of spaced apart supports, the screen extending therebetween.

The attachment device may comprise a magnet.

The apparatus may include a handle, which may be connected to the, or each, support. The handle may be aligned with the attachment device.

The screen may comprise a semi-rigid screen. The screen may comprise a plastic sheet. In some embodiments the screen is an acetate. The screen can be at least partially transparent (or may be opaque) and may filter ultraviolet radiation (UV) and/or infrared radiation (IR) and/or intense visible light.

The screen can be removably fastened to the support. The screen may be interchangeable such that a user can select a screen of a suitable size for a particular task.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, an embodiment thereof will now be described, reference being made to the accompanying drawings in which:
Figure 1 is a schematic perspective view of a welding screen apparatus according to an embodiment of the invention;
Figure 2 is a schematic cross-sectional diagram through the line A-A of Figure 1; and
Figures 3A and 3B are schematic plan views of an embodiment in straight and arced configurations, respectively.

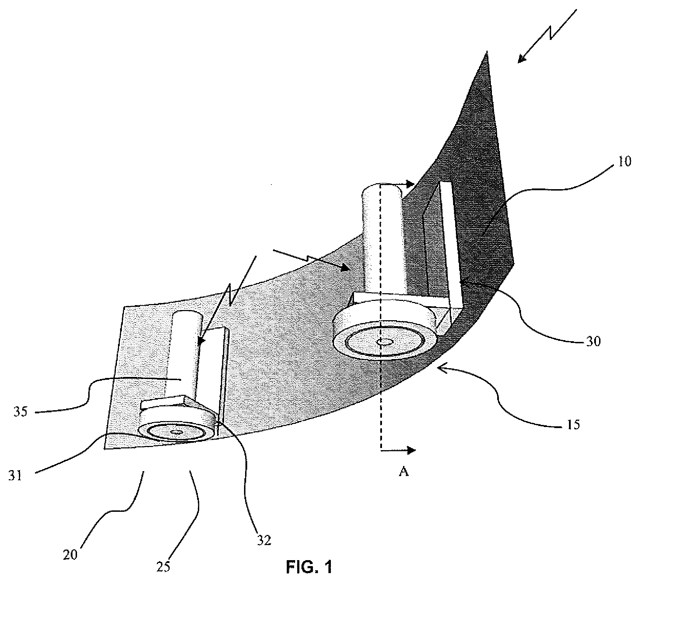

As shown in Figure 1, a portable work screen apparatus 1 according to an embodiment of the invention comprises a pair of supports 5 connected at spaced apart locations to a screen 10. The screen may be formed of any suitable material but is preferably thin acetate sheet, which may be at least partially transparent. The skilled person will appreciate that the screen should preferably meet any statutory requirements for welding safety equipment, for example the screen may filter Ultraviolet radiation (UV) and/or Infrared radiation (IR) and/or intense visible light.

The screen 10 is semi-rigid in that it is able to be self supporting over at least some of its length (i.e. away from the supports 5) but, as explained in further detail below, may be elastically deformed in use to take a desired shape. To allow for deformation the acetate sheet may have a thickness of approximately 1 mm or less. Each support 5 is provided with an attachment device 15, which in the illustrated embodiment is a magnet 25. Other attachment means, for example suction cups, or reusable adhesives, may provide similar functionality. An advantage of a magnetic attachment device is that magnets are generally robust. The attachment device 15 comprises a cup shaped cover 20 containing an annular magnet 25. The magnet 25 may be held in the cover 20 by any convenient means. For example, it may be bonded into the cover 20 using a suitable adhesive. Each support 5 comprises an L-shaped body 30 having a base portion 31 to which the attachment device 15 is connected and an arm 32 to which the screen 10 is attached.

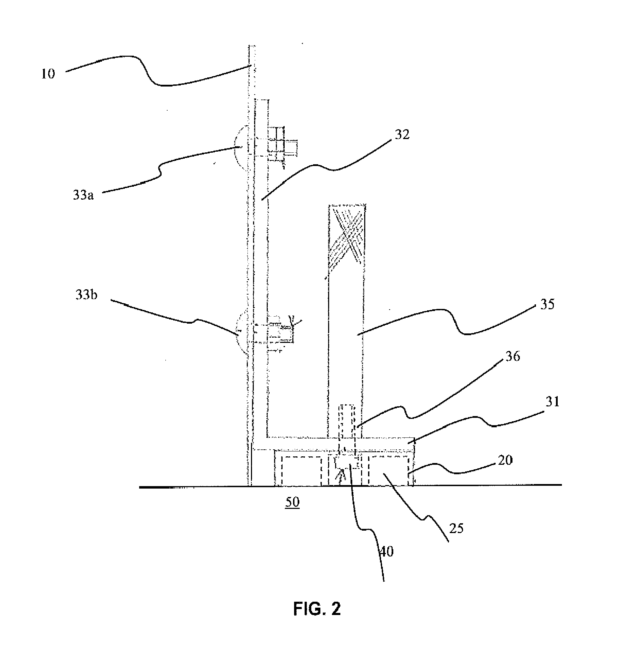

As best seen in the cross section of Figure 2, the screen 10 is connected to the arm 32 via a pair of bolts 33A, 33B. The skilled person will appreciate that other attachment means may be utilised, including permanent attachments such as bonding. An advantage of a removable fastening between the screen 10 and the support 5 is that the screen may be replaced for example, in the event of damage, to adjust the length of the screen or to substitute for a screen for a particular type of operation (for example, a specific grinding or welding screen could be used). The illustrated embodiment may be used with a screen having dimensions of approximately 200 mm in height (measured in the direction of the arm 32) by 300 mm in width, although it will be understood that it is possible to provide further screen(s) of any desired length and/or height.

A handle 35 in the form of a knurled rod is also connected to the base portion 31 of the support 5. The handle includes a threaded bore 36 at one end. A screw 40 connects the magnet holder cover 20 to the handle 35 via a hole in the base 31 of the support body 30. Thus, the attachment device 15 and the handle 35 are rigidly attached to the body 30 of the support 5. An advantage of connecting the attachment device 15 via the handle 35 is that the handle is aligned with the attachment device enabling accurate positioning of the attachment device 15.

In use, the portable screen apparatus 1 is placed on a surface 50 close (e.g. less than 0.5 metre away, but in general as close to the workpiece as the operator feels comfortable and which will not disrupt the welding operation) to a workpiece (not shown) with the attachment devices 15 releasably engaging the surface. As the attachment devices 15 positively engage the surface 50 to retain the screen apparatus in place the portable screen apparatus 1 may be used in any orientation (including inverted). The surface 50 defines an attachment plane of the attachment device 15. The base 31 of the support 5 is substantially aligned with the attachment plane. The arm 32 of the support 5 extends in a generally perpendicular direction from the attachment plane and defines the alignment of the screen 10. It will be noted that the screen 10 can extend below the base 31 so that it abuts the surface 50.

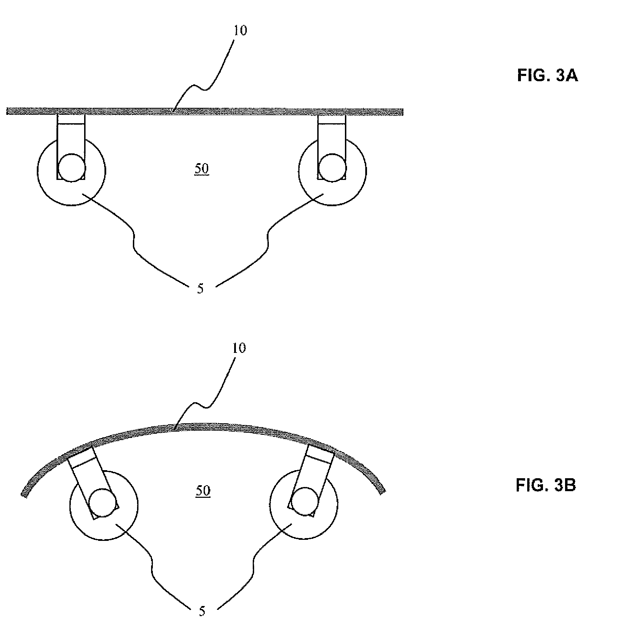

As shown in Figure 3, depending upon the orientation and position of the supports 5 on the surface 50, the screen 10 may take the form of a straight line (Figure 3A) or an arc (Figure 3B). Since the supports 5 are spaced apart, and may be at, or close to, opposite sides of the screen 10, the portable screen apparatus 1 may be placed directly onto the a surface of a workpiece without impeding the welding (or grinding or cutting) operation being carried out.

The skilled person will appreciate that modifications can be made to the above embodiment. For example, while the attachment device 15 in the illustrated embodiment is rigidly attached to support 5, in other embodiments the attachment device 15 may be adjustable or may have a predetermined range of motion to enable self alignment. The skilled person will appreciate that the welding screen apparatus of embodiments of the invention may also be suitable for use in other metalworking operations, such as grinding or cutting.

The embodiment described above provides a portable work/safety screen apparatus which, in use, can be attached directly to the article being processed, or to a neighbouring structure. This can allow a more compact screen to be used without compromising safety. The portable screen apparatus can be particularly advantageous when working in confined spaces.

## Claims

1. A portable work screen apparatus (1) including a screen (10) and at least one support (5) comprising an attachment device (15) for, in use, releasably connecting the screen to a surface (50) proximal to a workpiece.

2. A portable work screen apparatus according to claim 1, wherein the at least one support (5) comprises a base portion (31), the attachment device (15) being mounted on the base portion.

3. A portable work screen apparatus according to claim 2, wherein the at least one support (5) further comprises an arm (32) extending from the base portion (31), with the screen (10) being mounted on the arm.

4. A portable work screen apparatus according to claim 3, wherein the arm (32) is in substantially perpendicular alignment to an attachment plane of the attachment device (15).

5. A portable work screen apparatus according to claim 4, wherein the at least one support (5) has an L-shaped profile.

6. A portable work screen apparatus according to any one of the preceding claims, including a pair of spaced apart said supports (5), with the screen (10) extending therebetween.

7. A portable work screen apparatus according to any one of the preceding claims, wherein the attachment device (15) comprises a magnet.

8. A portable work screen apparatus according to any preceding claim, further comprising at least one handle (35).

9. A portable work screen apparatus according to claim 8, wherein the at least one handle (35) is connected to the at least one support (5).

10. A portable work screen apparatus according to claim 8 or 9, wherein the at least one handle (35) is aligned with the, or each said, attachment device (15).

11. A portable work screen apparatus according to any one of the preceding claims, wherein the screen (10) is semi-rigid.

12. A portable work screen apparatus according to claim 11, wherein the screen (10) comprises a plastic sheet.

13. A portable work screen apparatus according to claim 12, wherein the plastic sheet screen (10) comprises acetate.

14. A portable work screen apparatus according to any one of the preceding claims, wherein the screen (10) is at least partially transparent.

15. A portable work screen apparatus according to any preceding claim, wherein the screen (10) is releasably fastened to the support. (5).
